# EUROPÄISCHE PATENTSCHRIFT

(11) **EP 4 054 960 B1**
(45) Veröffentlichungstag und Bekanntmachung des Hinweises auf die Patenterteilung: **12.03.2025**
(21) Anmeldenummer: 20803471.0
(22) Anmeldetag: 05.11.2020
(51) Int. Cl.: B65G 21/12, B65G 41/00, B65G 47/51, B65G 65/00, B65G 15/12

(54) **BEHÄLTERTRANSPORTVORRICHTUNG SOWIE BEHÄLTERBEHANDLUNGSANLAGE**
CONTAINER TRANSPORT DEVICE AND CONTAINER HANDLING SYSTEM
DISPOSITIF DE TRANSPORT DE RÉCIPIENTS ET SYSTÈME DE MANIPULATION DE RÉCIPIENTS

(30) Priorität: 08.11.2019 DE 102019130149
(43) Veröffentlichungstag der Anmeldung: 14.09.2022
(73) Patentinhaber: KHS GmbH, 44143 Dortmund (DE)
(72) Erfinder: KAHE, Thorsten, 44309 Dortmund (DE); SCHOLZ, Ulrich, 59348 Lüdinghausen (DE); STIENEN, Thomas, 59425 Unna (DE)
(86) Internationale Anmeldenummer: PCT/EP2020/081039
(87) Internationale Veröffentlichungsnummer: WO 2021/089664

(56) Entgegenhaltungen:
- EP-A1- 2 581 328
- WO-A1-2019/154440
- WO-A1-2019/179768
- DE-C1- 4 224 836
- US-A- 4 792 995
- US-A- 6 110 088

## Beschreibung

Die Erfindung bezieht sich auf eine Behältertransportvorrichtung zum Transportieren von Behältern in einer Behälterbehandlungsanlage. Ferner bezieht sich die vorliegende Erfindung auf eine Behälterbehandlungsanlage mit zumindest einer Behältertransportvorrichtung zum Transportieren von Behältern zwischen zumindest zwei Behälterbehandlungsmaschinen der Behälterbehandlungsanlage.

Behälterbehandlungsmaschinen, bei denen die Behälter einzeln behandelt werden sind dem Fachmann in unterschiedlichster Bauweise bekannt. Dabei kann es sich bei den Behälterbehandlungsmaschinen beispielsweise um Etikettiermaschinen, Füllmaschinen, Verschließer, Einpacker oder Schrumpftunnel handeln, wie sie üblicherweise Anwendung in der Getränkeindustrie finden. Derartige Behälterbehandlungsmaschinen weisen vorzugsweise eine Leistung von mehr als 10000 Behälter pro Stunde, besonders bevorzugt eine Leistung von 50000 Behältern pro Stunde auf.

Unter "Behälter" im Sinne der Erfindung werden jedwede Behälter verstanden, insbesondere Flaschen, Dosen, Becher usw., hergestellt aus Metall, Glas und/oder Kunststoff, vorzugsweise aus PET (Polyethylenterephthalat).

Im Rahmen der vorliegenden Erfindung sind unter dem Begriff "Behälter" auch aus mehreren Behältern gebildete Gebinde zu verstehen, die mindestens zwei Behälter beinhalten, aber jeweils als eine Einheit transportiert werden. Beispiele für solche Gebinde sind Sixpacks, auf Trays angeordnete Flaschen oder Dosen.

In der Getränkeindustrie werden Behälter zu ihrer Behälterbehandlung mittels eines Behältertransportsystems durch eine Behälterbehandlungsanlage, die mehrere solche Behälterbehandlungsmaschinen umfassen kann, transportiert. Die Behälter werden zum Einführen in eine Behälterbehandlungsmaschine, bzw. in eine Behälterbehandlungsstation, wie bspw. eine Füllmaschine, stehend einreihig an die jeweilige Füllstation der Füllmaschine herangeführt.

Zum exakten, teilungsrichtigen Einführen der Behälter in die Behälterbehandlungsmaschine sind Transportschnecken bekannt, in welche die Behälter aufeinanderfolgend einzeln einlaufen und in welcher die Behälter auf den richtigen Teilungsabstand zueinander und in die richtige Position in Bezug auf die Behälterbehandlungsmaschine gebracht werden. Verschiedene Behälterbehandlungsmaschinen sind Bestandteil einer gesamten Behälterbehandlungsanlage. Derartige Gesamtanlagen decken beispielsweise alle Behandlungsschritte ab, die erforderlich sind, um ausgehend von leeren und schmutzigen Behältern, beispielsweise Glasflaschen, wieder zu sauberen, befüllten, verschlossenen und etikettierten Behälter, beispielsweise Mehrweg-Glasflaschen, zu gelangen, die dann wieder ein verkaufsfähiges Produkt darstellen.

Dabei ist es üblich, dass die einzelnen Behälterbehandlungsmaschinen der Behälterbehandlungsanlage in der richtigen Reihenfolge aufeinander folgen, so dass die Behälter nach Art einer vorgegebenen Fließfertigung und Fließgeschwindigkeit die Behälterbehandlungsanlage durchlaufen.

Vorwiegend in der Getränkeindustrie stellt sich das Problem, dass die, von einer Behälterbehandlungsmaschine in einem einspurigen Strom entlassene Behälter zum Transport für die Behandlung an der nachfolgenden Behälterbehandlungsmaschine und/oder auch zu deren zeitweisen Pufferung in einen mehrspurigen (Behälter)Strom umzuformen sind. Hierzu sind im Bereich des Behältertransports eine Vielzahl von Sondervorrichtungen, beispielsweise Auseinanderführungen, Zusammenführungen, Vereinzelungen usw., entwickelt worden.

Bekannt ist beispielsweise ein Behältertransportsystem (DE 35 05 253 C2), das zum Umformen eines ersten schmäleren Behälterstroms in einen zweiten breiteren Behälterstrom dient und aus einer ersten als Zuförderer ausgebildeten Transportstrecke, aus einer Überleit- oder Umformstrecke und aus einer als Abförderer dienenden zweiten Transportstrecke besteht. Die Umformstrecke ist dabei von einer Vielzahl von nebeneinander angeordneten Plattenbändern gebildet ist, deren einzelne Geschwindigkeiten sich gegenüber der ersten Transportstrecke allmählich verlangsamen und auf diese Weise aus dem ersten Behälterstrom den zweiten Behälterstrom bilden.

Bekannt ist weiterhin eine Transportvorrichtung zum Auseinanderführen eines ersten einspurigen Behälterstroms, d. h. zum Umformen des einspurigen Behälterstromes in einen zweiten breiteren Behälterstrom bzw. (US 1 719 897 A, DE 43 43 477 C1), wobei einzelne Behälter in einen, eine Umformstrecke bildenden Kanal geführt werden, der kontinuierlich hin- und hergeschwenkt werden kann und auf diese Weise eine Verteilung der am Ende aus dem Kanal auslaufenden Behälter bewirkt. Ein gewisser Nachteil dieser bekannten Transportvorrichtung besteht darin, dass der als Umformstrecke dienende Kanal eine relativ große Baulänge für die Transportvorrichtung bedingt.

Ferner ist aus der WO2019/179768 A1**,** welche eine Behältertransportvorrichtung mit den Merkmalen des Oberbegriffs des Anspruchs 1 offenbart, ein Produktionssystem für die Serienproduktion ins besondere von Kraftfahrzeugen, mit einem Behälter-Lagerbereich zur Lagerung von Behältern bekannt geworden, die für die Produktion bestimmte Bauteile enthalten, mit einer Mehrzahl von entfernt von dem Behälter- Lagerbereich angeordneten Produktionsregalen, aus denen Bauteile aus Behältern von Werkern entnehmbar sind. Ferner weist das Produktionssystem Transportmittel zum Transport von Behältern aus dem Behälter-Lagerbereich zu den Produktionsregalen auf, wobei die Transportmittel wenigstens ein fahrerloses Transportfahrzeug aufweisen, an dem ein Transportregal angeordnet und derart ausgebildet ist, dass Behälter aus dem Transportregal in einer Förderrichtung (Abgaberichtung) automatisch an Produktionsregale abgebbar sind oder abgegeben werden, wobei an dem FTF eine Handhabungsvorrichtung angeordnet ist, die einen Grundkörper und eine an dem Grundkörper angeordnete Handhabungseinheit auf weist, die für eine Entnahme von Behältern aus dem Trans portregal in einer Förderrichtung und eine Abgabe von Behältern an wenigstens ein Produktionsregal ausgebildet ist. Dabei ist die Handhabungseinheit relativ zu dem Grundkörper entlang einer ersten linearen Verstellachse in Förderrichtung linear verstellbar, entlang einer zweiten linearen Verstellachse quer zur Förderrichtung linear verstellbar, entlang einer dritten Verstellachse höhenverstellbar und um eine im Wesentlichen senkrechte vierte Verstellachse drehbar mit dem Grundkörper verbunden ist.

Ferner ist aus der EP 2 581 328 A1 ein Regalbediengerät für Lagerfächer mit offenem Fachboden bekannt geworden, mit einem Lastaufnahmemittel und wenigstens einem im Wesentlichen horizontal teleskopierbaren Warentransportgreifer mit wenigstens einer Warenauflage zum Untergreifen einer Ware, besitzt als Warentransportgreifer einen einzigen Teleskopgreiferdorn mit einer Warenauflage zum Untergreifen der Ware in einer nur labilen Position und zum Einstellen einer stabilen Transportposition der untergriffenen Ware wenigstens eine teleskopierbare Flanke und/oder einen teleskopierbaren Niederhalter. In einem mit dem Regalbediengerät ausgestatteten Kommissionierlager mit Lagerfächern mit mittig offenen Fachböden weist der Teleskopgreiferdorn eine Warenauflage mit einer Breite quer zur Teleskopierrichtung auf, die die Ware in nur einer kipplabilen Position auf der Warenauflage abstützt und ist die Fachbodenöffnung nur geringfügig weiter als die Breite.

Bekannt ist es weiterhin auch, zum Umformen beispielsweise eines einspurigen Behälterstroms in einen breiteren Behälterstrom steuerbare, die Behälter umlenkende Klappen vorzusehen. Nachteilig hierbei ist, dass die Steuerung und Bewegung dieser Klappen und damit das seitliche Verschieben des jeweiligen Behälters derart erfolgen müssen, dass die jeweilige Klappe bereits aus der Bewegungsbahn eines nachfolgenden Behälters, der unmittelbar auf einen mit der Klappe umgelenkten Behälter folgt, heraus bewegt ist, bevor dieser nachfolgende Behälter die entsprechende Klappe erreicht. Dies erfordert schnelle Steuer- und Bewegungsvorgänge für die Klappen und führt in der Regel auch zu hohen seitlichen Beschleunigungen der Behälter beim Umlenken mit einer starken Beeinträchtigung der Standfestigkeit der Behälter auf der entsprechenden Transportstrecke.

Häufig müssen dann die zum Transport und zur Pufferung in einen mehrspurigen Behälterstrom umgeformten oder aufgeteilten Behälter für die nachfolgende Behälterbehandlung an der in Transportrichtung folgenden Behälterbehandlungsmaschine mittels des Behältertransportsystems wieder auf einen einspurigen Behälterstrom zusammengeführt werden.

Derartige Behältertransportanlagen mit solchen Behältertransportsystemen sind somit aufwändig und teuer. Weiterhin sind derartige Behältertransportsysteme starr und unflexible ausgeführt, so dass Anpassungen an geänderte Produktionsprozesse, beispielsweise die Verwendung einer anderen oder einer weiteren Behälterbehandlungsmaschine, nicht, oder nur mit erhöhtem Aufwand möglich sind. Hier setzt die vorliegende Erfindung an, und will insgesamt Abhilfe und Verbesserung schaffen.

Ausgehend hiervon ist es Aufgabe der Erfindung, eine Behältertransportvorrichtung zum Transportieren von Behältern in einer Behälterbehandlungsanlage anzugeben, die möglichst flexibel an sich ändernde Produktionsprozesse angepasst werden kann.

Diese Aufgabe wird durch eine Behältertransportvorrichtung zum Transportieren von Behältern in einer Behälterbehandlungsanlage den Merkmalen des unabhängigen Patentanspruchs 1 gelöst. Die Unteransprüche betreffen dabei besonders vorteilhafte Weiterbildungen der Erfindung.

Die Behälterbehandlungsvorrichtung, umfasst zumindest ein Fahrwerk zum Abstützen der Behältertransportvorrichtung auf einer Fahrbahn. An dem Fahrwerk ist dabei ein Gestell angeordnet, an dem mehrere Tablare vorgesehen sind, die untereinander unabhängig höhenverstellbar ausgebildet sind.

Das zumindest eine Tablar weist dabei eine Transportfläche mit mehreren im Wesentlichen parallel zueinander angeordneten Transportelementen zur reihenförmigen Zwischenspeicherung und Förderung von Behältern auf. Ferner ist dabei bevorzugt jedes der Transportelemente unabhängig voneinander in zwei unterschiedlichen Förderrichtungen gesteuert und/oder geregelt antreibbar ausgebildet.

Gemäß einer vorteilhaften Ausführungsvariante ist dabei vorgesehen, dass das Fahrwerk zumindest zwei motorisch antreibbare Räder zum autonomen Bewegen der Behältertransportvorrichtung entlang einer vorgebbaren Bewegungsbahn umfasst.

Gemäß einer weiteren vorteilhaften Ausführungsvariante ist dabei vorgesehen, dass eine Navigationseinrichtung zum Bestimmen einer Position der Behältertransportvorrichtung vorgesehen ist.

Gemäß einer nochmals weiteren vorteilhaften Ausführungsvariante ist dabei vorgesehen, dass die Navigationseinrichtung zumindest einen Magnetsensor zum Bestimmen der Relativlage der Behältertransportvorrichtung bezüglich in einer Bodenebene eingelassener Magneten umfasst.

Gemäß einer nochmals weiteren vorteilhaften Ausführungsvariante ist dabei vorgesehen, dass das Fahrwerk einen Sensor zum Kollisionsschutz aufweist.

Gemäß einer nochmals weiteren vorteilhaften Ausführungsvariante ist dabei vorgesehen, dass eine Eingabevorrichtung zum direkten Eingeben und/oder drahtlosen Empfangen von Bewegungsbahnen vorgesehen ist.

Erfindungsgemäß ist dabei vorgesehen, dass an dem Gestell mehrere Tablare vorgesehen sind, die jeweils einzeln und unabhängig von den anderen Tablaren höhenverstellbar ausgebildet sind.

Gemäß einer nochmals weiteren vorteilhaften Ausführungsvariante ist dabei vorgesehen, dass das jeweilige Tablar mit seiner Transportfläche auf die relative Höhe einer Transportebene der Behälterbehandlungsmaschine vorzugsweise stufenlos verfahrbar ausgebildet ist.

Gemäß einer nochmals weiteren vorteilhaften Ausführungsvariante ist dabei vorgesehen, dass jedes Tablar einen eigenständigen Motorantrieb, vorzugsweise einen Servo- oder Schrittmotor, zur Höhenverstellung des jeweiligen Tablars aufweist. Besonders bevorzugt dient der jeweilige, zur Höhenverstellung des jeweiligen Tablars vorgesehene Motorantrieb, auch zum Antrieb der mehreren Transportelemente des entsprechenden Tablars, wozu beispielsweise ein mechanisches Schaltgetriebe vorgesehen sein kann, welches entweder eine Wirkverbindung des Motorantriebs mit der Höhenverstellung oder mit mindestens einem Transportelement des entsprechenden Tablars herstellen kann.

Gemäß einer nochmals weiteren vorteilhaften Ausführungsvariante ist dabei vorgesehen, dass die mehreren Transportelemente eines entsprechenden Tablars unabhängig voneinander mit unterschiedlichen Fördergeschwindigkeiten gesteuert und/oder geregelt antreibbar ausgebildet sind.

Gemäß einer nochmals weiteren vorteilhaften Ausführungsvariante ist dabei vorgesehen, dass die mehreren Tablare identisch zueinander ausgebildet sind.

Gemäß einer nochmals weiteren vorteilhaften Ausführungsvariante ist dabei vorgesehen, dass die Transportelemente entlang ihrer Längserstreckung geringfügig bereiter ausgebildet sind, als die größte Breite bzw. der größte Durchmesser der mittels der Transportelemente beförderten Behälter.

Gemäß einer nochmals weiteren vorteilhaften Ausführungsvariante ist dabei vorgesehen, dass die Transportelemente entlang ihrer Längserstreckung mehr als doppelt so breit ausgebildet sind, als die größte Breite bzw. der größte Durchmesser zweier kontaktschlüssig aneinander stehender Behälter.

Der Ausdruck "im Wesentlichen" bzw. "etwa" bedeutet im Sinne der Erfindung Abweichungen vom jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren.

Die Erfindung wird im Folgenden anhand der Figuren an Ausführungsbeispielen näher erläutert. Es zeigen:
- Fig. 1: beispielhaft und in grob schematischer Draufsicht eine Ausführungsvariante einer erfindungsgemäßen Behälterbehandlungsanlage,

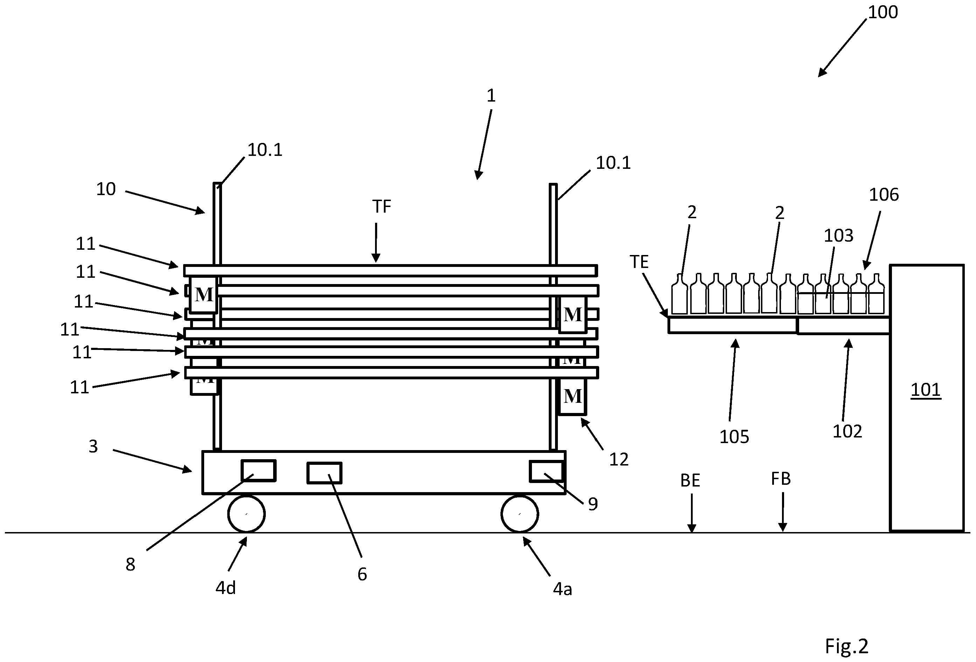

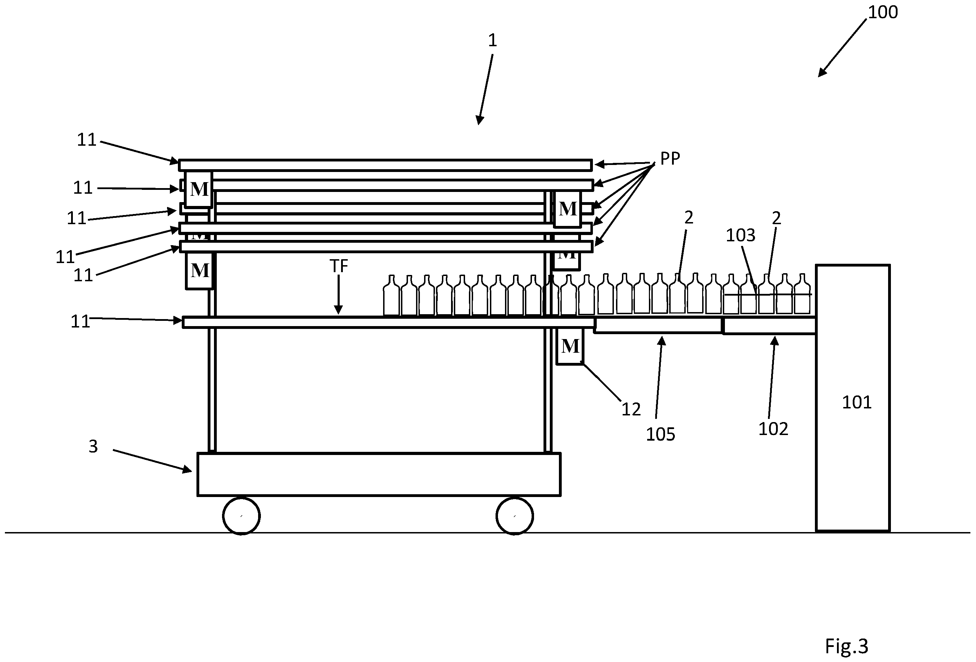

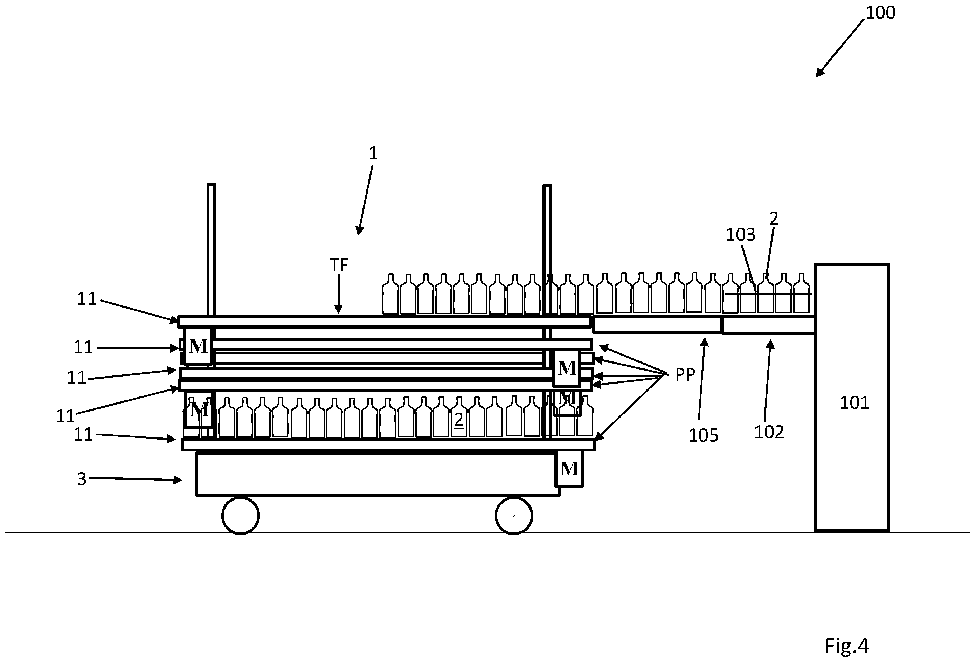

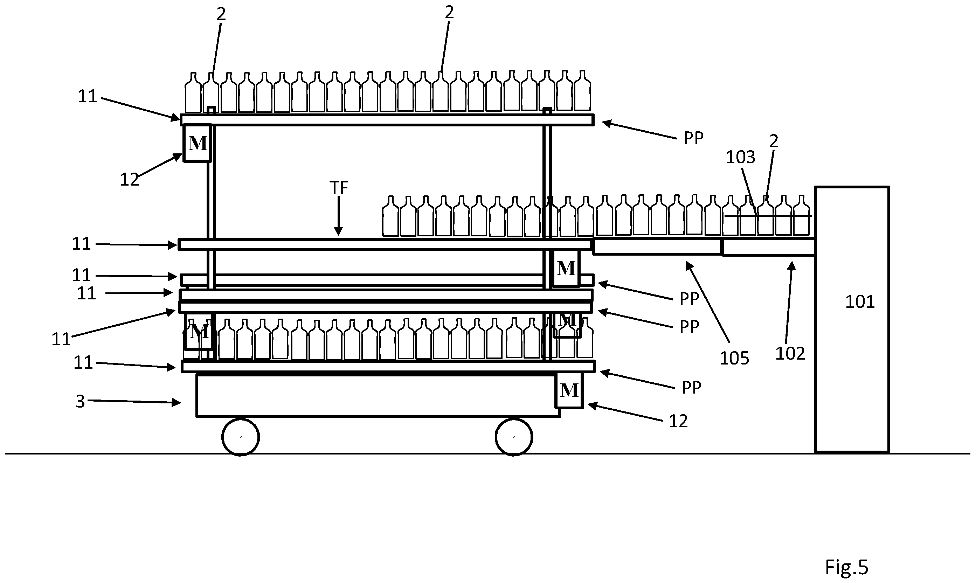

- Fig.2 bis 5: beispielhaft und in grob schematischer Seitenansicht unterschiedliche Beladungszustände einer Ausführungsvariante einer erfindungsgemäßen Behältertransportvorrichtung, und
- Fig. 6: ein beispielhaftes Navigationssystem für eine erfindungsgemäße Behältertransportvorrichtung.

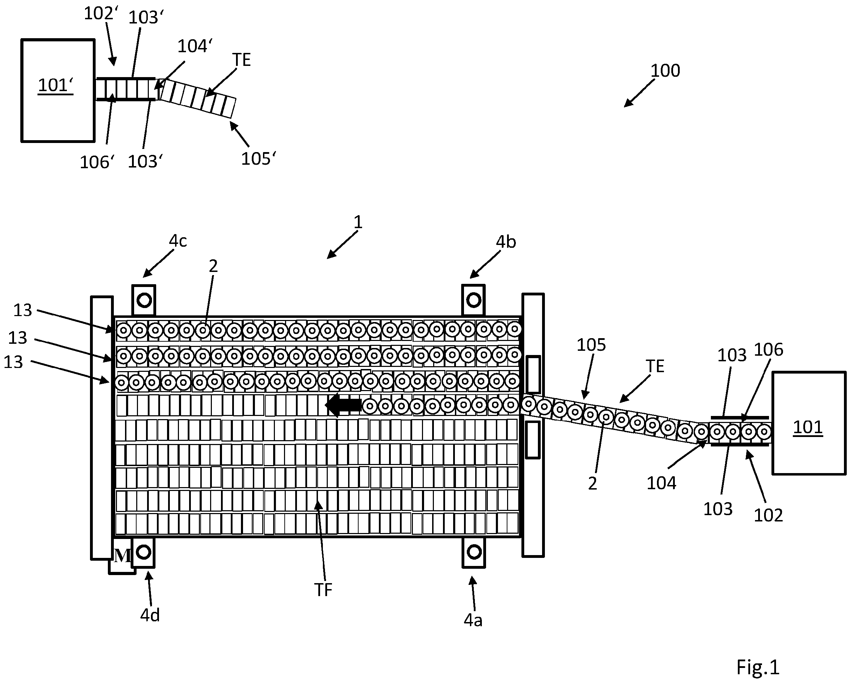

Die in der Fig. 1 allgemein mit 100 bezeichnete Behälterbehandlungsanlage umfasst dabei zumindest zwei räumlich zueinander beabstandete sowie auf einer Bodenebene **BE** aufstehend angeordnete Behälterbehandlungsmaschinen 101, 101', die jeweils zur Behandlung von Behältern 2 ausgebildet sind.

Insbesondere sind die Behälterbehandlungsmaschinen 101, 101' dazu ausgebildet, die Behälter 2 einzeln an dafür vorgesehenen Behälterbehandlungsstationen zu behandeln. Dabei kann es sich bei den Behälterbehandlungsmaschinen 101, 101' um eine Etikettiermaschine und/oder Füllmaschine und/oder einen Verschließer und/oder einen Einpacker und/oder einen Schrumpftunnel handeln, wie sie insbesondere Anwendung in der Getränkeindustrie finden.

In der in Figur 1 dargestellten Ausführungsvariante umfasst die Behälterbehandlungsanlage 100 beispielhaft zwei Behälterbehandlungsmaschinen 101, 101'. Ebenso sind jedoch Ausführungsvarianten der Erfindung mit drei, vier, fünf, sechs oder mehr Behälterbehandlungsmaschinen 101, 101' der Behälterbehandlungsanlage 100 möglich. Auch kann es sich bei den Behälterbehandlungsmaschinen 101, 101' um gleiche oder unterschiedliche Behälterbehandlungsmaschinen 101, 101' handeln. Sind also beispielsweise zwei Behälterbehandlungsmaschinen 101, 101' vorgesehen, so kann es sich dabei um eine Füllmaschine und eine Etikettiermaschine oder alternativ auch um zwei Etikettiermaschinen handeln.

Insbesondere weisen die Behälterbehandlungsmaschinen 101, 101' vorzugsweise eine Leistung von mehr als 10000 Behälter 2 pro Stunde, besonders bevorzugt eine Leistung von 50000 Behältern 2 pro Stunde auf.

Erfindungsgemäß werden dabei die Behälter 2 innerhalb der Behälterbehandlungsanlage 100 mit einer Behältertransportvorrichtung 1 zum Transportieren von Behältern 2 zwischen den Behälterbehandlungsmaschinen 101, 101' transportiert bzw. befördert.

Mehr im Detail ist dabei die Behältertransportvorrichtung 1 dazu ausgebildet, die Behälter 2 zumindest zwischen einem Behälterauslauf 102 einer ersten Behälterbehandlungsmaschine 101 und einem Behältereinlauf 102' einer zweiten Behälterbehandlungsmaschine 101' zu transportieren.

Dabei können die Behälterbehandlungsmaschinen 101, 101' zumindest im Bereich ihres jeweiligen Behältereinlaufs und/oder Behälterauslaufs 102, 102' seitliche Führungsgeländer 103, 103' zum Ausbilden von Führungsgassen 104, 104' für die einreihige Führung der Behälter 2 aufweisen. Zwar ist in der Figur 1 für die erste Behälterbehandlungsmaschine 101 nur deren Behälterauflauf 102 und für die zweite Behälterbehandlungsmaschine 101' nur deren Behältereinlauf 102' angedeutet, jedoch weisen beiden Behälterbehandlungsmaschinen 101, 101' jeweils sowohl einen Behältereinlauf als auch einen Behälterauslauf 102, 102' auf.

Dabei weisen die Behälterbehandlungsmaschinen 101, 101' an ihrem Behältereinlauf und/oder ihrem Behälterauslauf 102, 102' mindestens eine, bevorzugt zwei Andockeinheiten 105, 105' zum Andocken der Behältertransportvorrichtung 1 in der nachstehend noch nähergehend erläuterten Art und Weise auf. Ferner sind die Andockeinheiten 105, 105' zum Fördern der Behälter 2, insbesondere stehenden Transportieren der Behälter 2 auf einer Transportebene TE ausbildet.

Besonders bevorzugt weisen die Behälterbehandlungsmaschinen 101, 101' an ihrem Behältereinlauf und/oder ihrem Behälterauslauf 102, 102' eine Pufferfläche 106, 106' zum zumindest temporären Puffern der Behälter 2 auf.

Die Behältertransportvorrichtung 1 ist dabei zum Transportieren der Behälter 2 innerhalb der Behälterbehandlungsanlage 100 ausgebildet, und umfasst hierfür zumindest ein Fahrwerk 3 zum Abstützen der Behältertransportvorrichtung 1 auf einer Fahrbahn FB, die mit der Bodenebene BE zusammenfällt.

Das Fahrwerk 3 umfasst im dargestellten Ausführungsbeispiel vier Rädern 4a, 4b, 4c und 4d. Die Räder 4a, 4b sind dabei als Antriebsräder ausgebildet, während die Räder 4c und 4d als nicht-angetriebene Nachlaufrollen ausgebildet sein können. Die als Antriebräder ausgebildeten Räder 4a, 4b können durch unterschiedliche Drehzahlen eine Differenzgeschwindigkeitslenkung der Behältertransportvorrichtung 1 ermöglichen.

Alternativ können die als Antriebsräder ausgebildeten Räder 4a, 4b um eine vertikale Achse mittels eines nicht näher dargestellten Lenkantriebs lenkbar sein, um eine Lenkung der Behältertransportvorrichtung 1 zu erzielen. Insbesondere sind die als Antriebsräder 4a, 4b ausgebildeten Räder hierfür um jeweils 360° Grad drehbar um die vertikale Achse an dem Fahrwerk 3 angeordnet.

Zur Energieversorgung der Behältertransportvorrichtung 1 dient dabei eine Batterie 5. Alternativ kann die Energieversorgung auch mittels eines Doppelschichtkondensators erfolgen. Diese Lösung zeichnet sich durch sehr kurze Ladungszyklen, beispielsweise 3 Sekunden, aus. Zusätzlich kommt bei dieser Lösung eine Pufferbatterie zum Einsatz, da die Behältertransportvorrichtung 1 auch bei leerem Kondensator noch die nächste Ladestation der Behälterbehandlungsanlage 100 erreichen muss bzw. die Steuerung aktiv bleiben muss. Ein Steuergerät 6 steuert dabei die als Antriebsrollen ausgebildeten Räder 4a, 4b an, so dass die Behältertransportvorrichtung 1 nun die Behälter 2 innerhalb der Behälterbehandlungsanlage 100 transportieren, also befördern kann.

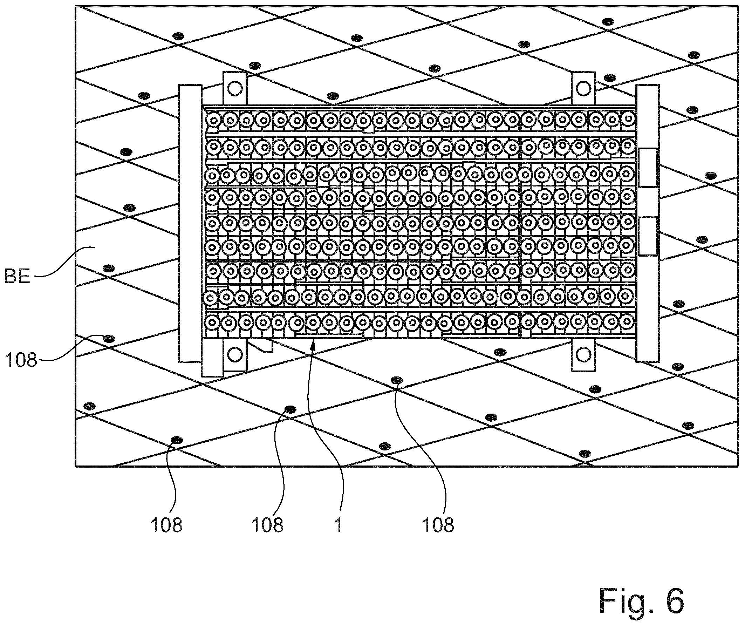

Um eine autonome Navigation der Behältertransportvorrichtung 1 innerhalb des von der Behälterbehandlungsanlage 1 ausgebildeten Raums zu ermöglichen, ist, wie in Fig. 6 dargestellt, in einer beispielhaften Ausführungsvariante in der Bodenebene BE des Arbeitsbereichs der Behälterbehandlungsanlage 100, also in dem Arbeitsboden, für die Behältertransportvorrichtung 1 ein Magnetraster aus einzelnen Permanentmagneten 108 verlegt, die in Fig. 6 der Übersichtlichkeit halber nicht alle bezeichnet sind. Die Permanentmagneten 108 sind dabei Teil oder Bestandteil der Bodenebene BE der Behälterbehandlungsanlage 100.

Mittels eines Magnetsensors 8 kann die Behältertransportvorrichtung 1 die Permanentmagneten 108 der Bodenebene BE detektieren. Bei Inbetriebnahme des der Behältertransportvorrichtung 1 findet eine Positionsreferenzierung statt. Jedem Permanentmagneten 108 in der Bodenebene BE der Behälterbehandlungsanlage 100 sind dabei individuelle x-, y-Koordinaten zugeordnet. Bei der anfänglichen Referenzierung wird der Behältertransportvorrichtung 1 mitgeteilt, an welcher Koordinatenposition sie sich befindet.

Aus der Anzahl und der Lage der bei der Fortbewegung der Behältertransportvorrichtung 1 mittels des Magnetsensors 8 detektierten Permanentmagneten 108 der Bodenebene BE kann eine geplante Route gefahren werden. Zudem kann vorgesehen sein, dass zur Kompensation von Einflüssen wie Schlupf an den Rädern 4a, 4b, 4c, 4d ein permanenter Soll-/Ist-Vergleich durchgeführt und die Bewegungsbahn entsprechend korrigiert wird. Somit ist eine exakte Positionsbestimmung der Behältertransportvorrichtung 1 innerhalb des Raums der Behälterbehandlungsanlage 100, in diesem Fall der Bodenebene BE, möglich.

Um zusätzlich einen Kollisionsschutz für die Behältertransportvorrichtung 1 sicherzustellen, kann ein Sensor 9 vorgesehen sein, der sich beispielsweise an der Front Behältertransportvorrichtung 1 befindet und insbesondere mittels Radar, Laser, Ultraschall, Infrarot oder dergleichen Objekte in der geplanten Bewegungsbahn, also dem Fahrweg Behältertransportvorrichtung 1 erkennen kann, so dass dieses die Fahrt bei Gefahr unterbrechen bzw. ein Ausweichmanöver einleiten kann.

Die geplanten Fahrwege, bzw. Bewegungsbahnen können dem Steuergerät 6 der Behältertransportvorrichtung 1 drahtlos übermittelt werden. Dies ermöglicht die Einbindung der Behältertransportvorrichtung 1 in ein Prozessleitsystem, welches individuell für einzelne Behältertransportvorrichtung 1 jeweilig Arbeitsaufgaben und die damit assoziierten Fahrwege übermitteln kann. Damit wird eine hohe Individualisierung der einzelnen Behälterbehandlungsvorrichtung 1 erreicht.

Gegebenenfalls kann die Behältertransportvorrichtung 1 auch eine manuelle Eingabevorrichtung aufweisen, die es einem Werker ermöglicht, eine einzelne Behälterbehandlungsvorrichtung 1 für Sonderaufgaben schnell und problemlos unabhängig vom Prozessleitsystem zu konfigurieren.

Dabei ist an dem Fahrwerk 3 der Behältertransportvorrichtung 1 ein als Haltegerüst ausgebildetes Gestell 10 angeordnet, das sich in seiner Längserstreckung lotrecht oder näherungsweise lotrecht zur Bodenebene BE erstreckt. Insbesondere kann das Gestell 10 aus vier rohrförmigen Haltmitteln 10.1 gebildet sein, die als Hohlprofil ausgebildet sein können. Insbesondere sind die Haltemittel 10.1 als rohrförmiger Profilstab mit konzentrischem, rechteckigem, ovalem oder anderem geschlossenen Querschnitt ausgebildet, dessen Wandungen aus Stahl, insbesondere Edelstahl, oder einem anderen Werkstoff, beispielsweise Aluminium, bestehen.

An dem Gestell 10 sind dabei mehrere Tablare 11, vorzugsweise mehr als 5 Tablare, jeweils höhenverstellbar an dem Gestell 10 der Behältertransportvorrichtung 1 angeordnet. Erfindungsgemäß sind die mehreren Tablare 11 untereinander unabhängig höhenverstellbar ausgebildet, so dass jedes Tablar 11 eine individuelle relative Höhe zur Bodeneben BE als auch zu dem benachbarten, also darüber- und/oder darunterliegenden, Tablar 11 aufweisen kann.

Die mehreren Tablare 11 bilden an ihrer entsprechenden Oberseite jeweils eine Transportfläche TF für die Behälter 2 aus. Die jeweiligen Transportflächen TF benachbarter Tablare 11 sind jeweils parallel zueinander sowie parallel zur Bodenebene BE höhenverstellbar ausgebildet. Auch eine spitzwinklige Ausrichtung eines Tablars 11 zur Bodenebene BE ist denkbar. Diese muss dann jedoch so eingestellt sein, dass die die auch der Transportfläche TF des Tablars 11 verbrachten Behälter 2 nicht zum Umfallen neigen - also ein stabiler Stand der Behälter 2 noch sichergestellt ist.

Hierfür kann jedes Tablar 11 einen eigenständigen Motorantrieb 12, insbesondere einen Elektromotor, besonders vorteilhaft einen Servo- oder Schrittmotorantrieb, aufweisen. Auch ist es möglich, dass die mehreren Tablare 11 zur Höhenverstellung einen gemeinsamen Motorantrieb 12 aufweisen. Der jeweilige Motorantrieb 11 wird dabei energetisch über die Batterie 5 gespeist und mittels des Steuergeräts 6 gesteuert- und/oder geregelt.

Insbesondere ist die Behältertransportvorrichtung 1 dazu ausgebildet, das jeweilige Tablar 11 mit seiner Transportfläche TF auf die relative Höhe der Transportebene TE einer Andockeinheit 105, 105' zu verfahren, so dass sich eine stoßfreie, also stufenlos und planar ausgebildet, Übergabefläche zwischen der Transportfläche TE des entsprechenden Tablars 11 und der Transportebene TE der entsprechenden Andockeinheit 105, 105' einstellt.

Ferner weist das zumindest eine Tablar 11 an der Transportfläche TF mehrere im Wesentlichen parallel zueinander angeordnete Transportelemente 13 zur reihenförmigen Zwischenspeicherung und Förderung der Behälter 2 auf. Jedes der Transportelemente 13 dieses zumindest einen Tablars 11 ist dabei unabhängig voneinander in zwei unterschiedliche Förderrichtungen gesteuert und/oder geregelt antreibbar ausgebildet.

Auch kann vorgesehen sein, dass die Transportelemente 13 unabhängig voneinander mit unterschiedlichen Fördergeschwindigkeiten gesteuert und/oder geregelt antreibbar ausgebildet sind. Besonders vorteilhaft sind die Fördergeschwindigkeiten der einzelnen Transportelemente 13 unabhängig sowie stufenlos verstellbar zueinander ausgebildet.

Die Ansteuerung der Transportelemente 13 kann dabei über das Steuergerät 6 erfolgen.

Hierfür kann jedes Transportelement 13 eines entsprechenden Tablars 11 einen eigenständigen Motorantrieb, insbesondere einen Elektromotor, besonders vorteilhaft einen Servo- oder Schrittmotorantrieb, aufweisen.

Auch ist es möglich, dass die mehreren Transportelemente 13 eines entsprechenden Tablars 11 einen gemeinsamen Motorantrieb 12 insbesondere einen Elektromotor, besonders vorteilhaft einen Servo- oder Schrittmotorantrieb, aufweisen.

Besonders vorteilhaft ist dabei vorgesehen, dass dieser gemeinsame Motorantrieb 12 dieses zumindest einen Tablars 11 auch zur Höhenverstellung dieses Tablars 11 ausgebildet ist. In anderen Worten ist also vorgesehen, dass je Tablar 11 ein gemeinsamer Motorantrieb 12 sowohl für die Höhenverstellung dieses Tablars 11, als auch zum Antrieb sämtlicher Transportelemente 13 dieses Tablars 11 genutzt wird. Der gemeinsame Motorantrieb 11 wird dabei energetisch über die Batterie 5 gespeist und mittels des Steuergeräts 6 gesteuert- und/oder geregelt.

Die Transportelemente 13 des zumindest einen Tablars 11 sind dabei als endlos umlaufende Transportelemente, insbesondere als Transportbänder und/oder Transportketten ausgebildet.

Vorzugsweise weist dabei ein Tablar 11 mindestens 5, besonders vorteilhaft 6, 7, 8, 9, 10 oder mehr reihenförmig zueinander angeordnete Transportelemente 13 auf, die untereinander entlang ihrer jeweiligen Längserstreckung parallel oder im Wesentlichen parallel zueinander ausgerichtet sind.

Besonders vorteilhaft sind dabei die mehreren Tablare 11 einer Behältertransportvorrichtung 1 identisch zueinander aufgebaut, und weisen dafür insbesondere dieselbe Anzahl an Transportelementen 13 untereinander auf.

Dabei kann vorgesehen sein, dass die Transportelemente 13 entlang ihrer Längserstreckung geringfügig bereiter ausgebildet sind, als die größte Breite bzw. der größte Durchmesser der mittels der Transportelemente 13 beförderten Behälter 2. Insbesondere sind die Transportelemente 13 zwischen 5mm und 25mm breiter ausgebildet als die größte Breite bzw. der größte Durchmesser der Behälter 2, besonders vorteilhaft zwischen 5mm und 15mm. Damit wird sichergestellt, dass die auf den Transportelementen 13 aufstehend beförderten Behälter 2 einer Reihe nicht gegen die Außenmantelfläche der Behälter 2 einer benachbarten Reihe des benachbarten Transportelementes 13 stoßen.

Besonders vorteilhaft kann dabei auch vorgesehen sein, dass die Transportelemente 13 entlang ihrer Längserstreckung mehr als doppelt so breit ausgebildet sind, als die jeweilige größte Breite bzw. der größte Durchmesser zweier kontaktschlüssig aneinander stehender Behälter 2. Insbesondere sind die Transportelemente 13 zwischen 5mm und 25mm breiter ausgebildet als die jeweilige größte Breite bzw. der größte Durchmesser zweier kontaktschlüssig aneinander stehender Behälter 2, besonders vorteilhaft zwischen 5mm und 15mm. Damit können gleichzeitig zwei Behälter 2 auf eine Transportelement 13 verbracht werden bzw. von diesem entladen werden, was zu einem besonders schnellen Be- und Entladen führt.

Zur Beladung einer leeren Behältertransportvorrichtung 1 wird diese über die Andockeinheit 105 an die in Figur 1 mit dem Bezugszeichen 101 versehene und Behälter 2 abgebende Behälterbehandlungsmaschine vorzugsweise autonom verfahren und angedockt.

Dabei wird das erste Tablar 11 mit seiner Transportfläche TF auf die relative Höhe der Transportebene TE der Andockeinheit 105 bewegt, so dass sich eine stoßfreie Übergabefläche zwischen der Transportfläche TE dieses ersten Tablars 11 und der Transportebene TE der entsprechenden Andockeinheit 105 einstellt.

Beispielsweise erfolgt die Beladung eines Tablars 11 mit Behälter 2 je Transportelement 13 dieses Tablars 11, also reihenförmig. Durch gezielte Ansteuerung eines Transportelementes 13 werden so viele Behälter 2 von der abgebenden Behälterbehandlungsmaschine 101 übernommen, bis das entsprechende Transportelement 13 vorzugsweise vollständig mit Behältern 2 befüllt ist. Anschließend wird mittels der Andockeinheit 105 dann anlog die Verbindung zu einem weiteren, noch leeren Transportelement 13 desselben Tablars 11 hergestellt werden. Durch gezielte Ansteuerung des nun verbundenen Transportelementes 13 wird auch dieses Transportelement 13 vorzugsweise vollständig mit Behältern 2 befüllt. Dieser Vorgang wird so oft wiederholt, bis sämtliche Transportelemente 13 eines Tablars 11, also bis das gesamte Tablar 11, mit Behältern 2 befüllt ist.

Anschließend kann das dann vollständig mit Behälter 2 beladene Tablar 11 in eine Parkposition PP verfahren werden und ein weiteres, noch leeres Tablar 11 wird auf in der erläuterten Art und Weise mittels der Andockeinheit 105 angedockt. Anschließend werden sämtliche Transportelemente 13 dieses weiteren Tablars 11 mit Behälter 2 gefüllt, bevor auch dieses nächste Tablar 11 ebenfalls in Parkposition PP fährt.

Dabei kann die jeweilige Parkposition PP eines entsprechenden Tablars 11 oberhalb und/oder unterhalb der Transportebene TE vorgesehen sein. Beim Parken der entsprechenden Tablare 11 in der jeweiligen Parkposition PP werden diese unter- oder übereinander derart angehoben und/oder abgesenkt, dass der relative Abstand zwischen zwei benachbarten Tablaren 11 der Höhe der zu puffernden Behälter 2 zuzüglich eines kleinen Sicherheitsabstandes beträgt. Der Sicherheitsabstand kann dabei vorteilhaft zwischen 5mm und 15mm ausgebildet sein. Somit wird eine optimale Packungsdichte erzielt.

Wird ausschließlich der Raum oberhalb der Transportebene TE als Parkposition PP für volle Tablare 11 genutzt, so befinden sich die noch leeren Tablare 11 bis zu ihrer Befüllung unterhalb der Transportebene TE. Volle Tablare 11 werden nach deren Befüllung mit Behältern 2 oberhalb der Transportebene TE verfahren.

Wird sowohl der Raum oberhalb als auch der Raum unterhalb Transportebene TE als Parkposition PP für vollständig mit Behälter 2 gefüllte Tablare 11 genutzt, so werden die noch leeren Tablare 11 als Stapel behandelt und zumindest teilweise gemeinsam synchron verfahren. Beispielsweise wird zunächst das oberste Tablar 11 beladen und dann nach oben in eine Parkposition PP verfahren, usw. Der Stapel der Tablare 11 fährt also jeweils nach der Befüllung eines Tablars 11 mit Behältern 2 nacheinander nach oben, in eine Parkposition PP oberhalb der Transportebene TE. Während das unterste Tablar 11 des Stapels vom Stapel gelöst wird und auf die Transportebene TE verfahren wird, so dass diese unterste Tablar 11 im Anschluss daran beladen werden kann. Anschließend fährt dieses Tablar 11 in eine möglichst tiefe Parkposition PP unterhalb der Transportebene TE. Dieser Vorgang wird so oft wiederholt, bis sämtliche Tablare 11 einer Behältertransportvorrichtung 1 vorzugsweise vollständig mit Behältern 2 gefüllt ist.

Der Entladevorgang einer Behälterbehandlungsvorrichtung 1 erfolgt in analog umgekehrter Reihenfolge dazu.

Es kann auch vorgesehen sein, dass beladene, aber auch leere Tablare 11 sich sowohl an der abgebenden, als auch an der aufnehmenden Behälterbehandlungsmaschinen 101, 101' befinden.

Ebenfalls kann eine Behälterbehandlungsanlage 100 mehrere, beispielsweise 2, 3, 4, 5, 6, 7 oder mehr, derartig ausgebildete Behältertransportvorrichtungen 1 aufweisen. Diese Behältertransportvorrichtungen 1 können sich auch in einer Zwischenposition zwischen dem Behälterauslauf 102 der ersten Behälterbehandlungsmaschine 101 und dem Behältereinlauf 102' der zweiten Behälterbehandlungsmaschine 101', also quasi "auf dem Weg", befinden. Ebenfalls kann sich eine weitere Behältertransportvorrichtung 1 in einer Warteposition zwischen dem Behälterauslauf 102 der ersten Behälterbehandlungsmaschine 101 und dem Behältereinlauf 102' der zweiten Behälterbehandlungsmaschine 101' befinden.

Die Erfindung wurde voranstehend an Ausführungsbeispielen beschrieben. Es versteht sich, dass eine Vielzahl von Änderungen oder Abwandlungen möglich sind, sofern dadurch nicht der durch die Patentansprüche definierte Schutzbereich der Erfindung verlassen wird.

### Bezugszeichenliste

- 100: Behälterbehandlungsanlage
- 101, 101': Behälterbehandlungsmaschine
- 102: Behälterauslauf
- 102': Behältereinlauf
- 103, 103': Führungsgeländer
- 104, 104': Führungsgassen
- 105, 105': Andockeinheit
- 106, 106': Pufferfläche
- 108: Permanentmagneten

- 1: Behältertransportvorrichtung
- 2: Behälter
- 3: Fahrwerk
- 4a, 4b, 4c, 4d: Räder
- 5: Batterie
- 6: Steuergerät
- 8: Magnetsensor
- 9: Sensor
- 10: Gestell
- 10.1: Haltemittel
- 11: Tablar
- 12: Motorantrieb
- 13: Transportelement

- BE: Bodenebene
- TF: Transportfläche
- FB: Fahrbahn
- PP: Parkposition

## Patentansprüche

1. Behältertransportvorrichtung zum Transportieren von Behältern (2) in einer Behälterbehandlungsanlage (100),
umfassend ein Fahrwerk (3) zum Abstützen der Behältertransportvorrichtung (1) auf einer Fahrbahn (FB), wobei an dem Fahrwerk (3) ein Gestell (10) angeordnet ist, an dem zumindest ein Tablar (11) zum Transportieren der Behälter (2) höhenverstellbar vorgesehen ist, wobei das zumindest eine Tablar (11) eine Transportfläche (TF) mit mehreren im Wesentlichen parallel zueinander angeordneten Transportelementen (13) zur reihenförmigen Zwischenspeicherung und Förderung von Behältern (2) aufweist, und wobei jedes der Transportelemente (13) unabhängig von den anderen Transportelementen (13) gesteuert und/oder geregelt antreibbar ausgebildet ist, vorzugsweise in zwei unterschiedliche Förderrichtungen antreibbar, **dadurch gekennzeichnet, dass** an dem Gestell (10) mehrere Tablare (11) vorgesehen sind, die untereinander unabhängig höhenverstellbar ausgebildet sind.

2. Behältertransportvorrichtung nach Anspruch 1, **dadurch gekennzeichnet, dass** das Fahrwerk (3) zumindest zwei motorisch antreibbare Räder (4a, 4b, 4c, 4d) zum autonomen Bewegen der Behältertransportvorrichtung (1) entlang einer vorgebbaren Bewegungsbahn umfasst.

3. Behältertransportvorrichtung nach Anspruch 1 oder 2, **dadurch gekennzeichnet, dass** eine Navigationseinrichtung zum Bestimmen einer Position der Behältertransportvorrichtung (1) vorgesehen ist.

4. Behältertransportvorrichtung nach Anspruch 3, **dadurch gekennzeichnet, dass** die Navigationseinrichtung zumindest einen Magnetsensor (8) zum Bestimmen der Relativlage der Behältertransportvorrichtung (1) bezüglich in einer Bodenebene (BE) eingelassener Magneten (108) umfasst.

5. Behältertransportvorrichtung nach einem der vorangehenden Ansprüche, **dadurch gekennzeichnet, dass** das Fahrwerk (3) einen Sensor (9) zum Kollisionsschutz aufweist.

6. Behältertransportvorrichtung nach einem der vorangehenden Ansprüche, **dadurch gekennzeichnet, dass** eine Eingabevorrichtung zum direkten Eingeben und/oder drahtlosen Empfangen von Bewegungsbahnen vorgesehen ist.

7. Behältertransportvorrichtung nach einem der vorangehenden Ansprüche, **dadurch gekennzeichnet, dass** das jeweilige Tablar (11) mit seiner Transportfläche (TF) auf die relative Höhe einer Transportebene (TE) der Behälterbehandlungsmaschine (101, 101') vorzugsweise stufenlos verfahrbar ausgebildet ist.

8. Behältertransportvorrichtung nach einem der vorangehenden Ansprüche, **dadurch gekennzeichnet, dass** jedes Tablar (11) einen eigenständigen Motorantrieb, vorzugsweise einen Servo- oder Schrittmotor, aufweist, der sowohl zur Höhenverstellung des jeweiligen Tablars (11), als auch zum Antrieb der mehreren Transportelemente (13) des entsprechenden Tablars (11) ausgebildet ist.

9. Behältertransportvorrichtung nach einem der vorangehenden Ansprüche, **dadurch gekennzeichnet, dass** die mehreren Transportelemente (13) eines entsprechenden Tablars (11) unabhängig voneinander mit unterschiedlichen Fördergeschwindigkeiten gesteuert und/oder geregelt antreibbar ausgebildet sind.

10. Behältertransportvorrichtung nach einem der vorangehenden Ansprüche, **gekennzeichnet durch** mehrere identisch zueinander ausgebildete Tablare (11).

11. Behältertransportvorrichtung nach einem der vorangehenden Ansprüche, **dadurch gekennzeichnet, dass** die Transportelemente (13) entlang ihrer Längserstreckung geringfügig bereiter ausgebildet sind, als die größte Breite bzw. der größte Durchmesser der mittels der Transportelemente (13) beförderten Behälter (2).

12. Behältertransportvorrichtung nach einem der vorangehenden Ansprüche, **dadurch gekennzeichnet, dass** die Transportelemente (13) entlang ihrer Längserstreckung mehr als doppelt so breit ausgebildet sind, als die jeweilige größte Breite bzw. der größte Durchmesser zweier kontaktschlüssig aneinander stehender Behälter (2).

13. Behälterbehandlungsanlage (100) mit zumindest einer Behältertransportvorrichtung (1) zum Transportieren von Behältern (2) zwischen zumindest zwei Behälterbehandlungsmaschinen (101, 101') der Behälterbehandlungsanlage (100), wobei die zumindest eine Behältertransportvorrichtung (1) wenigstens ein zwischen einem Behälterauslauf (102) einer ersten Behälterbehandlungsmaschine (101) und einem Behältereinlauf (102') einer zweiten Behälterbehandlungsmaschine verfahrbares Fahrwerk (3) zum Abstützen der zumindest einen Behältertransportvorrichtung (1) auf einer Fahrbahn (FB), wobei an dem Fahrwerk (3) ein Gestell (10) angeordnet ist, an dem zumindest ein Tablar (11) zum Transportieren der Behälter (2) höhenverstellbar vorgesehen ist, wobei das zumindest eine Tablar (11) eine Transportfläche (TF) mit mehreren im Wesentlichen parallel zueinander angeordneten Transportelementen (13) zur reihenförmigen Zwischenspeicherung und Förderung von Behältern (2) aufweist, und wobei jedes der Transportelemente (13) unabhängig von den anderen Transportelementen (13) gesteuert und/oder geregelt antreibbar ausgebildet ist, vorzugsweise in zwei unterschiedliche Förderrichtungen antreibbar, wobei an dem Gestell (10) mehrere Tablare (11) vorgesehen sind, die untereinander unabhängig höhenverstellbar ausgebildet sind.

14. Behälterbehandlungsanlage (100) nach Anspruch 13, **dadurch gekennzeichnet, dass** die Behälterbehandlungsmaschinen (101, 101') an ihrem Behältereinlauf und/oder ihrem Behälterauslauf (102, 102') mindestens eine Andockeinheit (105, 105') zum Andocken der Behältertransportvorrichtung (1) aufweisen.

15. Behälterbehandlungsanlage (100) nach Anspruch 13 oder 14, **dadurch gekennzeichnet, dass** die Behälterbehandlungsmaschinen (101, 101') an ihrem jeweiligen Behältereinlauf und/oder ihrem Behälterauslauf (102, 102') eine Pufferfläche (106, 106') zum zumindest temporären Puffern der Behälter (2) aufweisen.

## Claims

1. Container transport device for transporting containers (2) in a container handling system (100),
comprising a chassis (3) for supporting the container transport device (1) on a track (FB), wherein a frame (10) is arranged at the chassis (3), provided on which is at least one tray (11) for transporting the containers (2) in a height-adjustable manner, wherein the at least one tray (11) comprises a transport surface (TF) with a plurality of transport elements (13) arranged essentially parallel to one another for the intermediate storage and conveying of containers (2) in rows, and wherein each of the transport elements (13), independently of the other transport elements (13), is configured such as to be capable of being controlled and/or regulated by means of a drive, preferably being capable of being driven in two different conveying directions, **characterised in that** a plurality of trays (11) are provided at the frame (10),which are configured such as to be height-adjustable independently of one another.

2. Container transport device according to claim 1, **characterised in that** the chassis (3) comprises at least two motor-driven wheels (4a, 4b, 4c, 4d) for the autonomous movement of the container transport device (1) along a predetermined movement track.

3. Container transport device according to claim 1 or 2, **characterised in that** a navigation device is provided for determining a position of the container transport device (1).

4. Container transport device according to claim 3, **characterised in that** the navigation device comprises at least one magnet sensor (8) for determining the relative position of the container transport device (1) in relation to magnets (108) let into a base plane (BE).

5. Container transport device according to any one of the preceding claims, **characterised in that** the chassis (3) comprises a sensor (9) for protection against collision.

6. Container transport device according to any one of the preceding claims, **characterised in that** an input device is provided for the direct inputting and/or wireless reception of movement paths.

7. Container transport device according to any one of the preceding claims, **characterised in that** the respective tray (11) with its transport surface (TF) is configured such as to be moved, preferably steplessly, up to the relative height of a transport plane (TE) of the container handling machine (101, 101').

8. Container transport device according to any one of the preceding claims, **characterised in that** each tray (11) comprises an independent motor drive, preferably a servomotor or stepping motor, which is configured for the height adjustment of the respective tray (11), as well as for the drive of the plurality of transport elements (13) of the corresponding tray (11).

9. Container transport device according to any one of the preceding claims, **characterised in that** the plurality of transport elements (13) of a corresponding tray (11) are configured such as to be capable of being controlled and/or regulated independently of one another, with different conveying speeds.

10. Container transport device according to any one of the preceding claims, **characterised by** a plurality of identically configured trays (11).

11. Container transport device according to any one of the preceding claims, **characterised in that** the transport elements (13) are configured along their longitudinal extension as slightly wider than the greatest width or the greatest diameter of the containers (2) being conveyed by means of the transport elements (13).

12. Container transport device according to any one of the preceding claims, **characterised in that** the transport elements (13) are configured along their longitudinal extension as more than double as wide as the respective greatest width or the greatest diameter respectively of two containers (2) standing in contact next to one another.

13. Container handling system (100), with at least one container transport device (1) for transporting containers (2) between at least two container handling machines (101,101') of the container handling system (100), wherein the at least one container transport device (1) comprises at least movable chassis (3), which can be moved between a container outlet (102) of a first container handing machine (101) and a container inlet (102') of a second container handling machine, for supporting the at least one container transport device (1) on a track (FB), wherein arranged at the chassis (3) is a frame (10), provided at which is at least one tray (11) for transporting the containers (2) in a height-adjustable manner, wherein the at least one tray (11) comprises a transport surface (TF) with a plurality of transport elements (13) arranged essentially parallel to one another, for the intermediate storage and conveying of containers (2) in rows, and wherein each of the transport elements (13) are configured such as to be capable of being controlled and/or regulated by means of a drive, independently of the other transport elements (13), preferably in two different conveying directions, wherein a plurality of trays (11) are provided at the frame (10) which are configured such as to be height-adjustable independently of one another.

14. Container handling system (100) according to claim 13, **characterised in that** the container handling machines (101, 101') comprise at their container inlets and/or at their container outlets (102, 102') at least one docking unit (105, 105') for docking the container transport device (1).

15. Container handling system (100) according to claim 13 or 14, **characterised in that** the container handling machines (101, 101') comprise at their respective container inlets and/or their container outlets (102, 102') a buffer surface (106, 106') for the at least temporary buffering of the containers (2).

## Revendications

1. Dispositif de transport de contenants (2) destiné à transporter des contenants (2) dans une installation de traitement de contenants (100),
comprenant un train de roulement (3) pour soutenir le dispositif de transport de contenants (1) sur une voie de circulation (FB), dans lequel est disposé sur le train de roulement (3) un châssis (10), sur lequel au moins un plateau (11) est prévu ajustable en hauteur pour le transport des contenants (2), dans lequel l'au moins un plateau (11) présente une surface de transport (TF) avec plusieurs éléments de transport (13) disposés sensiblement parallèlement les uns aux autres pour le stockage intermédiaire en rangée, et le convoyage, de contenants (2), et dans lequel chacun des éléments de transport (13) est réalisé entraînable de manière commandée et/ou régulée indépendamment des autres éléments de transport (13), de préférence entraînable dans deux directions de convoyage différentes, **caractérisé en ce que** plusieurs plateaux (11), qui sont réalisés ajustables en hauteur indépendamment les uns des autres, sont prévus sur le bâti (10).

2. Dispositif de transport de contenants selon la revendication 1, **caractérisé en ce que** le train de roulement (3) comprend au moins deux roues (4a, 4b, 4c, 4d) entraînables de manière motorisée pour le déplacement autonome du dispositif de transport de contenants (1) le long d'une trajectoire de déplacement prédéterminable.

3. Dispositif de transport de contenants selon la revendication 1 ou 2, **caractérisé en ce qu'**un système de navigation est prévu pour définir une position du dispositif de transport de contenants (1).

4. Dispositif de transport de contenants selon la revendication 3, **caractérisé en ce que** le système de navigation comprend au moins un capteur magnétique (8) pour définir la position relative du dispositif de transport de contenants (1) par rapport à des aimants (108) encastrés dans un plan du sol (BE).

5. Dispositif de transport de contenants selon l'une quelconque des revendications précédentes, **caractérisé en ce que** le train de roulement (3) présente un capteur (9) pour la protection anticollision.

6. Dispositif de transport de contenants selon l'une quelconque des revendications précédentes, **caractérisé en ce qu'**un dispositif de saisie est prévu pour la saisie directe et/ou la réception sans fil de trajectoires de déplacement.

7. Dispositif de transport de contenants selon l'une quelconque des revendications précédentes, **caractérisé en ce que** le plateau (11) respectif est réalisé conduisible en continu avec sa surface de transport (TF) jusqu'à la hauteur relative d'un plan de transport (TE) de la machine de traitement de contenants (101, 101').

8. Dispositif de transport de contenants selon l'une quelconque des revendications précédentes, **caractérisé en ce que** chaque plateau (11) présente un entraînement motorisé autonome, de préférence un servomoteur ou un moteur pas à pas, qui est réalisé à la fois pour l'ajustement en hauteur du plateau (11) respectif et pour l'entraînement des plusieurs éléments de transport (13) du plateau (11) correspondant.

9. Dispositif de transport de contenants selon l'une quelconque des revendications précédentes, **caractérisé en ce que** les plusieurs éléments de transport (13) d'un plateau (11) correspondant sont réalisés entraînables de manière commandée et/ou régulée indépendamment les uns des autres avec des vitesses de convoyage différentes.

10. Dispositif de transport de contenants selon l'une quelconque des revendications précédentes, **caractérisé par** plusieurs plateaux (11) réalisés identiques les uns aux autres.

11. Dispositif de transport de contenants selon l'une quelconque des revendications précédentes, **caractérisé en ce que** les éléments de transport (13) sont réalisés le long de leur extension longitudinale de manière légèrement plus large que la plus grande largeur ou le plus grand diamètre des contenants (2) convoyés au moyen des éléments de transport (13).

12. Dispositif de transport de contenants selon l'une quelconque des revendications précédentes, **caractérisé en ce que** les éléments de transport (13) sont réalisés, le long de leur extension longitudinale, de largeur deux fois plus grande que la largeur respective la plus grande ou le diamètre le plus grand de deux contenants (2) se trouvant l'un contre l'autre en liaison de contact.

13. Installation de traitement de contenants (100) avec au moins un dispositif de transport de contenants (1) pour le transport de contenants (2) entre au moins deux machines de traitement de contenants (101, 101') de l'installation de traitement de contenants (100), dans laquelle l'au moins un dispositif de transport de contenants (1) comprend au moins un train de roulement (3) pouvant être déplacé entre une sortie de contenant (102) d'une première machine de traitement de contenants (101) et une entrée de contenant (102') d'une deuxième machine de traitement de contenants, destiné à soutenir l'au moins un dispositif de transport de contenants (1) sur une voie de circulation (FB), dans laquelle est disposé sur le train de roulement (3) un châssis (10), sur lequel est prévu au moins un plateau (11) ajustable en hauteur pour le transport des contenants (2), dans laquelle l'au moins un plateau (11) présente une surface de transport (TF) avec plusieurs éléments de transport (13) disposés sensiblement parallèlement les uns aux autres pour le stockage intermédiaire en rangée, et le convoyage, de contenants (2), et dans laquelle chacun des éléments de transport (13) est réalisé entraînable de manière commandée et/ou régulée indépendamment des autres éléments de transport (13), de préférence entraînable dans deux directions de convoyage différentes, dans laquelle plusieurs plateaux (11), qui sont réalisés ajustables en hauteur indépendamment les uns des autres, sont prévus sur le châssis (10).

14. Installation de traitement de contenants (100) selon la revendication 13, **caractérisée en ce que** les machines de traitement de contenants (101, 101') présentent sur leur entrée de contenant et/ou de leur sortie de contenant (102, 102') au moins une unité d'arrimage (105, 105') pour l'arrimage du dispositif de transport de contenants (1).

15. Installation de traitement de contenants (100) selon la revendication 13 ou 14, **caractérisée en ce que** les machines de traitement de contenants (101, 101') présentent sur leur entrée de contenant et/ou leur sortie de contenant (102, 102') une surface tampon (106, 106') pour mettre en tampon au moins temporairement les contenants (2).
